Europäisches Patentamt

(19) European Patent Office

Office européen des brevets

(11) **EP 0 694 774 A1**

(12) **EUROPEAN PATENT APPLICATION**

(43) Date of publication:
31.01.1996 Bulletin 1996/05

(51) Int. Cl.$^6$: **G01L 27/00**

(21) Application number: **94202194.0**

(22) Date of filing: **27.07.1994**

(84) Designated Contracting States:
**AT BE CH DE DK ES FR GB GR IE IT LI LU MC NL PT SE**

(71) Applicant: **AMETEK DENMARK A/S**
**DK-3520 Farum (DK)**

(72) Inventor: **Hansen, Jens Schmidt**
**DK-3050 Humlebaek (DK)**

(74) Representative: **Rindorf, Hans Joergen et al**
**DK-1864 Frederiksberg C (DK)**

(54) **Apparatus and method for the calibration of a pressure responsive device**

(57) An apparatus for the calibration of a pressure responsive device comprises a fluid-tight transmission line system (4), a reference pressure sensing means (2), first pressure setting means (10) adapted for providing an approximative setting of the pressure within said system, second pressure setting means (30) adapted for providing a fine adjustment setting of the pressure in said system, and control means (5) for receiving the signal from said reference pressure sensing means, controlling the operation of said first and said second pressure setting means and indicating whether the pressure sensed by said reference pressure sensing means substantially equates a predetermined set-point pressure value.

The invention also provides a method for the calibration of a pressure responsive device.

Fig. 1

## Description

The present invention relates to an apparatus and to a method for the calibration of a pressure responsive device. A pressure responsive device is here understood as comprising any device adapted for providing some detectable response or reaction presumed to have a known correlation with the pressure of a fluid, whether gaseous or liquid. Pressure responsive devices required to respond to the pressure of some fluid contained within a fluid-tight system will have to be so designed that they can interface with the remaining portion of such a system with fluid communication between the device and the remaining portion of the system while the containment barrier separating the fluid from the surroundings is maintained. Familiar pressure responsive devices are manometers, pressure transducers, pressure transmitters, pressure indicators, automatic pressure-operated relief valves, electric switches triggered at a fixed pressure level (possibly two different levels in case of a switch with hysteresis), etc. Calibration of these devices serves the purpose of verifying that the desired action takes place at the expected pressure level, verifying that a device, such as a transducer or an instrument designed for measuring or quantifying the pressure, actually operates as expected and with the expected degree of accuracy, establishing correction factors, etc.

Calibration is here understood as the act of subjecting the device under test to known well defined conditions, such as a predetermined set pressure, and observing or logging the response of the device under test. The calibration involves some reference sensor presumed to perform in a well defined and well known manner from which readings believed to represent the accurate actual pressure may be taken and which may be connected in a fluid-tight manner to the device under test. Although it is basically possible to make use of the fluid pressure in any fluid system available for the purpose of calibration, e.g. the system normally monitored by the device to be tested, it is in many applications more convenient to provide for the act of calibration a dedicated pressure setting means which may be operated separately from all other pressure systems thereby making it possible to take a device to be tested aside and run it through a test programme involving various pressures without being limited to the pressure range occuring during normal operation of a pressure system serving some other purpose.

One pressure setting device, commercially available from the Company AMETEK DENMARK A/S, for use in pressure calibration systems comprises a manually operated pump with check valves, a manually operated bleeder valve and a so-called vernier adjuster for fine adjustment. The vernier adjuster includes a small piston which can be moved manually by turning a screw with a fine pitch permitting a fine adjustment of the contained volume. A preselected pressure can be set accurately by initially pumping up the pressure to a level above the desired pressure, then bleeding the pressure down to approximately the correct pressure and finally turning the vernier adjuster up or down as appropriate while carefully monitoring a display connected to a reference pressure sensor. Should the pressure drift as it will frequently do due to a drift of temperature, it is necessary to turn the vernier adjuster again and it may be necessary to operate the pump or the bleeder valve again to adjust the pressure a second time.

Other pressure setting devices include powered pumps and control valves. Such devices have the disadvantages of being relatively complex and costly if they have to be designed to possess the capability of setting and maintaining selected pressures accurately and of demanding a substantial continual supply of power when required to keep up a selected pressure value.

The publication DE-A-4 220 083 teaches an apparatus adapted for creating a reference pressure inside a container which is partially filled with a liquid. The apparatus may be used for the calibration of instruments which are connected to an opening of the container arranged at a level above the surface of the liquid inside. A heating or cooling means is immersed into the liquid together with a temperature sensor. A preselected overpressure may be generated by heating the liquid until an appropriate portion of the liquid has evaporated, the temperature of the liquid being controlled by referring to a signal from the temperature sensor, a setpoint temperature being selected in accordance with the known relation between liquid temperature and pressure of saturated vapour above the liquid surface.

The concept of evaporating a liquid for the purpose of carrying out a calibration operation implies some practical complications. Saturated vapour is bound to precipitate on any cold surface so that equilibrium can be obtained only when all conduits and container surfaces have reached a uniform temperature. In case of extended narrow fluid lines, liquid traps may form implying that the pressure can no longer be trusted to be equal throughout the system. Should the system have a leak, vapour may escape and more liquid will be evaporated and escape the system thereby causing an undesirable contamination of the surroundings and a loss of liquid. Furthermore, the pressure sensor under test may be contaminated with the liquid, e.g. due to precipitating vapour, which may be undesirable in case of pressure sensors required to be used afterwards in very clean systems. Moreover, the pressure sensor under test will necessarily be subjected to different temperatures in accordance with the different pressures, every particular value of pressure corresponding to a particular temperature value, so that the effects on the sensor of the simultaneously occurring influences of temperature and pressure cannot be separated from each other.

US patents 4 567 773 and 4 711 130 teach pressure sensors with controlled heating elements intended for keeping the cores of the pressure sensors at constant temperatures so as to avoid disturbing influences from variations in the temperature of the fluid medium of which the pressure is to be measured.

The object of the invention is to provide an apparatus for the calibration of a pressure responsive device which can be built at a reasonable cost and which is capable of setting and maintaining accurate pressure values over an extended pressure range at a modest power consumption without placing any constraints on the temperature of the pressure responsive device and which may operate on a variety of fluid media.

It is a further object of the invention to provide an apparatus for the calibration of a pressure responsive device which can be built in compact, powered and automated versions at a reasonable cost.

These objects are achieved by the apparatus according to claim 1 and by the apparatus according to claim 14.

It is another object of the invention to provide a method for the calibration of a pressure responsive device which can be implemented in a comparatively simple manner and whereby calibration setpoint pressures may be set at any point within an extended range of pressures and be maintained accurately, and by which method a variety of fluid media may be used.

It is a further object of the invention to provide a method of pressure calibration which may be carried out independently of the actual temperature of the device under test thereby allowing calibrations to be carried out at any preselected temperature, e.g. a specified constant temperature as required.

These objects are achieved by the method according to claim 15 and by the method according to claim 16.

According to the embodiment of the invention described in claims 1 and 14 a first pressure setting means is operated to set the pressure approximately equal to the desired calibration pressure whereafter a second pressure setting means may be operated to provide fine adjustment of the pressure as necessary. The first pressure setting means is basically selected to have the capacity to set the pressure quickly whereas it is not required to be controllable to a high degree of accuracy. On the other hand, the second pressure setting means is basically selected to be controllable to a high degree of accuracy whereas it is not required to have a large capacity. This permits the choice of comparatively simple components.

The second pressure setting means is adapted to be operated continually at a low power consumption keeping the setpoint pressure controlled continually whereby it is possible to outbalance disturbing factors, such as a slow continual drift of the temperature or a small leak in the system. According to the invention, the second pressure means may be implemented without any moving parts and may be fully electronically controlled thereby providing for simple construction and reliable functioning at a minimum power consumption.

The first pressure setting means is designed with a comparatively large capacity sufficient to quickly input the energy necessary to obtain any pressure selected within an extended range of pressures and with the capability of preventing any backwards leakage flow when not in active operation. It may comprise a mechanical pump with check valves adapted to block the passage through the pump tightly when the pump is in a stand-by mode at substantially no power consumption. The first pressure setting means may comprise a compression pump, a high-pressure pump or a vacuum pump as necessary for the particular application, the second pressure setting means operating equally well at high and low pressures.

The importance of the capability of continual adjustment of the pressure will be evident from the following explanation concerning the influence of temperature variations which may occur during calibration with gaseous media.

When the volume of an enclosed quantity of gas is changed, the temperature and the pressure will simultaneously change according to the formula:

$$T^k \cdot p^{1-k} = constant \qquad (1)$$

which holds for the adiabatic state, i.e. under the presumption that energy is exchanged neither with the surroundings nor by internal reactions or transformations. Given an enclosed volume of gas at pressure $P_1$ and temperature $T_1$, which is compressed so that the pressure is changed to $P_2$, the resulting temperature $T_2$ may, under these assumptions, be calculated from:

$$\frac{T_2}{T_1} = \left(\frac{P_2}{P_1}\right)^{\frac{1-k}{k}} \qquad (2)$$

The small letter k is a constant which for atmospheric air may be assumed to have the value of 1.40. The temperatures are entered in their absolute values, i.e. in the unit Kelvin.

Table I lists some values calculated as examples for pressure changes with the factors 1 (i.e. no change), 2, 10, 20 and 100. From the table (column 3, second line) it appears that e.g. a tenfold increase in the pressure will increase the absolute temperature by a factor 1.9 corresponding to a change from 25 centigrades to 293 centigrades.

Table I

| $P_2/P_1$ | 1 | 2 | 10 | 20 | 100 |
|---|---|---|---|---|---|
| $T_2/T_1$ | 1 | 1,22 | 1,9 | 2,35 | 3,73 |
| $P_3/P_1$ | 1 | 1,64 | 5,3 | 8,5 | 26,8 |

Now if an enclosed volume of gas is allowed to exchange energy with its surroundings, e.g. by thermal exchange between the gas volume and the walls of the gas container, the gas volume will, under the presumption that the gas obeys the law for ideal gases, follow the well-known equation of state:

$$P \cdot V = nRT \qquad\qquad (3)$$

where P is the pressure, V the volume, n is the number of gas molecules, R is a constant and T the absolute temperature.

If for instance a compressed volume of gas loses energy by dissipating heat to the walls of the enclosing container, the pressure will drop. The bottom line in table I lists relative values of the pressure $P_3$ which would eventually be reached if the gas - after being compressed adiabatically - is subsequently allowed to cool to its starting temperature while being kept within the compressed volume. It may be seen (column 3, bottom line) that under these assumptions an adiabatic compression to a pressure ratio of 10 would eventually result in a pressure ratio of 5.3.

The example clearly illustrates the importance of allowing the enclosed gas volume time to stabilize its temperature before the pressure can be presumed to stay constant to a degree allowing any accurate calibration to be performed. Fortunately, for acts of calibration the heat capacity of gases is comparatively small thus allowing small enclosed volumes of gas to quickly reach a state of thermal equilibrium with the surrounding walls, but the delay of the thermal settlement cannot be neglected and the thermal settlement may be affected by other factors, such as thermal gradients in portions of the calibration instrument and heating or cooling gradients from the surroundings.

According to a preferred embodiment the second pressure setting means comprises a fluid containing enclosure which is provided with temperature setting means allowing the controlled setting of the temperature of at least a portion of said enclosure whereby the pressure of at least a portion of any fluid present in said enclosure will be affected. Hereby a fine adjustment of the pressure in the calibration system can be effected by appropriate setting of the temperature. Thus a pressure may be controlled by purely electronic means in a very accurate manner. According to this concept it is unneccessary to control the temperature of the entire calibration system as long as the temperature of said enclosure is appropriately controlled to develop the desired pressure.

According to the embodiment of the invention described in claims 15 and 16, the pressure is set and controlled substantially exclusively by solid state components, i.e. substantially through the operation of the above mentioned second the pressure setting means alone. This provides a particularly simple and reliable calibration proces.

Obviously the temperature of other portions of the calibration system may be linked to follow more or less the temperature of said enclosure provided there are ways of heat conduction between the components. However, it is generally preferred to scale down the heat conduction between the enclosure and the other portions of the system by keeping them not too close together and by making any connections between them comparatively long and not highly heat conductive. This serves the purpose of isolating in particular the pressure responsive device under test from the influences of varying temperatures in the enclosure.

According to a particularly preferred embodiment a heat insulating shield is provided for preventing thermal coupling between the device under test and the remaining portions of the calibration apparatus and in particular the enclosure.

The temperature setting means associated with said enclosure may comprise an electro-resistive heating element or it may, according to a particularly preferred embodiment, comprise a peltier element. A peltier element is a solid-state electronic device which may be used as a "heat pump" to heat or cool a particular spot, in this case the enclosure, depending on the magnitude and the polarity of the electric power fed to the peltier element. The peltier effect is an electro-physical property generally observed at the junction between conductors of two different materials. Particularly effective peltier elements include quaternary alloys of bismuth, tellurium, selenium and antimony doped and processed to yield oriented polycrystalline semiconductors with anisotropic thermoelectric property. A number of small elements are combined into plates, the small elements being so arranged and connected therein that direct current fed into terminals of a plate will heat one side of the plate and cool the opposite side whereas the situation is reversed when the polarity of the current is reversed.

According to a preferred embodiment of the invention, the enclosure comprises a planar coiled tube sandwiched in contact with the faces of a heating or cooling device. The tube has the advantage of being resistant to high pressure differentials across the tube wall, i.e. it is resistant to very high as well as to low internal pressures. By arranging the tube in the form of a planar coil a large area of contact relative to the internal volume in the tube is achieved making for a faster thermal response of the unit.

According to a particularly preferred embodiment, the tube is made from an electro-resistive material and provided with electric terminals so as to allow the wall of the tube to be heated directly by driving electric current through portions of the wall.

According to a further preferred embodiment, the apparatus is adapted for operating with gas as fluid filling in all internal parts.

The pressure variation capability provided in the embodiment where the second pressure setting means operates by setting the temperature within the enclosure while the filling of the system is gas throughout, may be estimated essentially through the following considerations.

The gas is assumed to obey the above-mentioned formula (3) (the equation of state for an ideal gas). Since this equation assumes a uniform temperature throughout the volume considered, it is not possible to apply the formula to the system as a whole since the temperature setting means only affect a portion of the system. For the sake of simplicity, it will now be assumed that the system containing the pressurized gas may be regarded as consolidated from two parts, A and B, which are in fluid communication with each other so that gas may propagate from one to the other and vice versa while here the two parts will be regarded as thermally insulated from each other. Each of the two parts is assumed to have a respective uniform internal temperature, i.e. any volume of gas moving out of one part and into the opposite one is assumed to quickly reach thermal equilibrium with the gas filling in the receiving part.

The constant volumes of the two portions will be referred to as $V_A$ and $V_B$, the temperatures as $T_A$ and $T_B$ and the pressure which is uniform throughout the entire system due to the fluid communication between the part volumes as P.

The current number of gas molecules in each of the two systems is referred to as $n_A$ and $n_B$, respectively. Now in the case of a uniform temperature throughout the total system, the number of gas molecules will be distributed in proportion to the volumes, i.e.:

$$\frac{n_A}{n_B} = \frac{V_A}{V_B} \qquad\qquad (4)$$

The volume of gas within each of the part systems obey the equation of state for the respective volume, i. e. in volume A:

$$n_A = \frac{PV_A}{RT_A} \qquad\qquad (5)$$

and in volume B:

$$n_B = \frac{PV_B}{RT_B}$$

$$(6)$$

Now the fraction of gas molecules currently present in the volume A, $F_A$ may be found by combining the equations (5) and (6):

$$F_A = \frac{n_A}{n_A + n_B} = \frac{1}{1 + \dfrac{V_B}{V_A} \cdot \dfrac{T_A}{T_B}} \tag{7}$$

This equation relates the fact that various proportions of gas molecules will be shifted between the volumes A and B depending upon the current relation between the absolute temperatures in order for the pressure to stay uniform throughout the entire system even while the temperature differs. Assuming now that the temperature in volume A is maintained constantly at $T_A$ while the temperature in volume B changes from an initial value of $T_{B1}$ into the value $T_{B2}$, the fraction of gas molecules initially present in volume A, $F_{A1}$, changes into $F_{A2}$. Since the temperature as well as the volume of A is unchanged the pressure which is uniform in the total system changes in exact proportion to the current fraction of gas molecules present in A, i.e. given the initial pressure is $P_1$ and the later pressure $P_2$:

$$\frac{P_2}{P_1} = \frac{F_{A2}}{F_{A1}} = \frac{1 + \dfrac{V_B}{V_A} \cdot \dfrac{T_A}{T_{B1}}}{1 + \dfrac{V_B}{V_A} \cdot \dfrac{T_A}{T_{B2}}} \tag{8}$$

In case the initial temperature in volume B is equal to the temperature in volume A, formula (8) reduces to:

$$\frac{P_2}{P_1} = \frac{1 + \dfrac{V_B}{V_A}}{1 + \dfrac{V_B}{V_A} \cdot \dfrac{T_A}{T_{B2}}} \tag{9}$$

In the particular case where $V_A = V_B$, i.e. the volume of the temperature controlled enclosure is equal to the total volume of the remaining portion of the system (the part assumed to have constant temperature), the equation further reduces to:

$$\frac{P_2}{P_1} = \frac{2}{1 + \dfrac{T_A}{T_{B2}}} \tag{10}$$

Table II lists some examples calculated from formula (10) and reflects the relative pressure changes which may be generated by various settings of the temperature in the temperature controlled portion of the system. Column 2 in table II indicates for example that an increase in temperature of 60 centigrades will yield a 9.2 per cent increase in the pressure whereas column 4 shows that a reduction of 40 centigrades will yield a pressure reduction of 7.2 per cent.

## Table II

| | | | | | | |
|---|---|---|---|---|---|---|
| $T_1$ | (centigrades) | 25 | 25 | 25 | 25 | 25 |
| $T_2-T_1$ | (centigrades) | 10 | 60 | 100 | -40 | 600 |
| $T_2$ | (centigrades) | 35 | 85 | 125 | -15 | 625 |
| $T_2/T_1$ | (in Kelvin) | $\frac{308}{298}$ | $\frac{358}{298}$ | $\frac{398}{298}$ | $\frac{258}{298}$ | $\frac{898}{298}$ |
| $P_2/P_1$ | | 1.017 | 1.092 | 1.144 | 0.928 | 1.502 |
| $\frac{P_2 - P_1}{P_1} \cdot 100$ | | 1.7 | 9.2 | 14.4 | -7.2 | 50.2 |

A range of temperature settings of from +60 to -40 centigrades could easily be generated and controlled by a suitable peltier element and the example shows that this system would be sufficient for setting the pressure accurately if the first pressure setting means could provide the pressure to a tolerance within -9 and +7 per cent of the desired value. Since mechanical pumps with the capacity of setting the pressure within an accuracy of 1 per cent are commercially available at a moderate cost a system with the parameters of the example would have plenty of extra capacity for compensating the pressure against disturbancies. In fact, a smaller volume of the temperature controlled enclosure could easily be selected in which case the adjustment capability would be calculated from formula (9).

An instrument with the capacity of managing temperatures in core portions ranging up to 625°C and even higher is considered to be practically and commercially feasible with an appropriate design and with the use of high temperature materials and insulation for the core portions. As it appears from the last column of table II, an instrument of this kind will be capable of setting a 50% overpressure using nothing but solid state components. An even higher pressure ratio could be obtained by selecting a temperature-controlled enclosure with a larger volume in which case the adjustment capability would be calculated from formula (9).

According to a preferred embodiment the apparatus includes a control system adapted to operate the first pressure setting means in case the pressure deviates more from the desired value than can be compensated for by the second pressure setting means. Hereby a small volume of the enclosure in the second pressure setting means will suffice since the second pressure setting means is only required to have the capacity of making the final adjustment which is too fine for the first pressure setting means to handle accurately.

Further objects, advantages and features of the invention will appear from the following detailed description of preferred embodiments which is given with reference to the drawings, where:

Fig. 1    shows a block diagramme of a calibration apparatus according to a first embodiment of the invention,
Fig. 2    shows a block diagramme of a calibration apparatus according to a second embodiment of the invention,
Fig. 3    shows a thermovessel according to a first embodiment hereof,
Fig. 4    shows a thermovessel according to a second embodiment hereof, and
Fig. 5    shows a planar section along the line V-V in Fig. 4.

The figures are not to scale and are schematic only showing parts essential to the understanding of the invention, other components being omitted from the drawings for the sake of clarity. Throughout the figures like reference numerals are used for like parts.

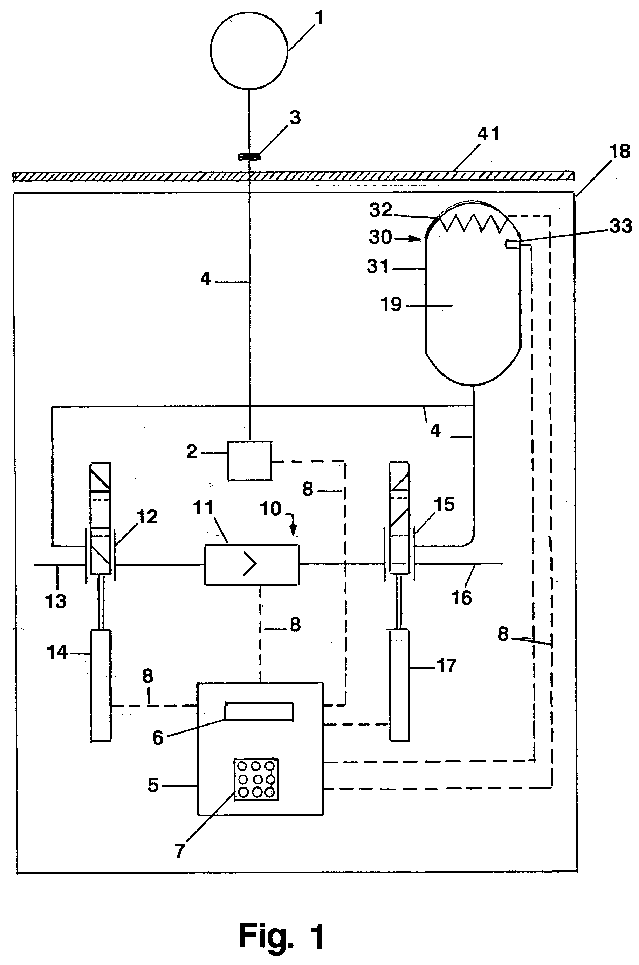

Reference is first made to Fig. 1 showing a first embodiment of the calibration apparatus 18 according to the invention. In Fig. 1 the test device, i.e. the pressure responsive device to be calibrated designated with reference numeral 1, is releasably connected by interface connector 3 to a transmission line system 4 with a view to calibration. The transmission line system 4 is a fluid-tight system connecting various parts of the calibration apparatus to the device under test in fluid-transmitting manner, keeping the fluid filling sealed from the environment so as to permit controlled pressures different from the ambient pressure to be maintained inside the transmission line system and to be communicated among various parts of the system as required for the calibration operation.

An important part of the calibration apparatus is the reference pressure sensor 2 which is used to provide standard reference values of the fluid pressure in the transmission line system 4 during the act of calibration. In the apparatus according to the invention, any precision pressure sensor can be used which can be read electronically. In the most preferred embodiment, the reference pressure sensor comprises a membrane coupled to a silicon chip provided with a set of strain gauges whereby the force acting on the membrane can be measured. The reading from the reference pressure sensor is taken to represent the actual pressure value for the purpose of the calibration.

The first pressure setting means designated as a whole with reference numeral 10 essentially comprises a pump 11, a pump inlet valve 12 and a pump outlet valve 15. The pump inlet valve 12 is controlled by a solenoid 14, whereby the moving element of the valve can be set to any of three different positions, an uppermost position (illustrated in Fig. 1) where the pump inlet is connected to the transmission line system 4, a mid-position where the port to the transmission line system 4 is closed and the pump inlet is connected to a vent line 13 to the ambient atmosphere, and a lowermost position where the port to the transmission line system 4 and the pump inlet port are both vented to the ambient atmosphere by the vent line 13.

The pump outlet valve 15 is also controlled by a solenoid 17 by which the moving element of the valve may be set to any of three positions, the uppermost position (illustrated in Fig. 1) where the pump outlet is connected to the ambient atmosphere through a vent line 16 whereas a port to the transmission line system is closed, a mid-position where the pump outlet is connected to the transmission line system 4, and a lowermost position in which the pump outlet as well as the port to the transmission line system are both vented to the ambient atmosphere. The pump as well as both of the valves are connected by cabling 8 to control logic 5 from where the functions and operations are controlled.

The reference pressure sensor 2 is also connected by cabling 8 to the control logic 5 so that the control logic can measure the pressure by the reference pressure sensor. The control logic 5 is provided with a display 6 for displaying various information and it is connected to a key pad 7 from where the functions may be controlled.

The control logic comprises input circuits for processing signals from the reference pressure sensor and from the thermosensor 23 (to be described below), output circuits for powering and controlling the valves, the pump and the temperature setting means 32 (to be described below), and a microprocessor programmed to perform various useful functions as will also be described below. The components and the design of the control logic and of the cabling shall not be described in greater detail herein as it is considered to lie within the capabilities of those skilled in the art to suggest appropriate components and designs for implementing the functions described.

When operated the pump 11 drives fluid from the left hand side towards the right hand side in Fig. 1 as indicated by the arrow. When both of the valves are in the uppermost positions as shown in Fig. 1, fluid is drawn from the transmission line system 4 through the pump inlet valve 12 and discharged to the ambient atmosphere through the vent line 16 and thus the transmission line system is evacuated. When both of the valves are in their respective mid-positions, air can be drawn from the ambient atmosphere through the vent line 13 and the pump inlet valve 12 to be compressed in the pump and forced into the transmission line system 4 so that pressure in the transmission line system is increased. When the valves are in their respective lowermost positions, the system is vented to the atmosphere and may be cleaned.

The second pressure setting means 30 essentially comprises an enclosure or a thermovessel 31 fitted with temperature setting means 32, e.g. an electro-resistive heating element, and with a thermosensor 33. The temperature setting means 32 is connected by cabling 8 to the control logic 5 so as to be operated under control from the control logic 5. The thermosensor 33 is also connected by suitable cabling 8 to the control logic 5 thus allowing the actual temperature inside the thermovessel 31 to be measured by the control logic 5.

According to a preferred embodiment, the calibration apparatus 18 comprises a heat insulating shield 41 fulfilling the purpose of reducing any thermal influence from the calibration apparatus onto the pressure responsive device under test in order to avoid any biasing of the device under test to be caused by the operation of the calibration apparatus. The heat insulating shield may be designed as known in the art to bar heat conduction by radiation and conduction as well as convection.

The calibration apparatus 18 according to the embodiment of the invention illustrated in Fig. 1 is adapted for the calibration of gas sensors, i.e. the relevant pressure medium is some kind of gas which fills substantially the entire transmission line system and the thermovessel. Although Fig. 1 shows conduits for venting to the atmosphere (vent lines 13 and 16), these conduits could obviously be modified by one skilled in the art in case the calibration apparatus was to operate on some particular gas to be kept separate from the ambient atmosphere.

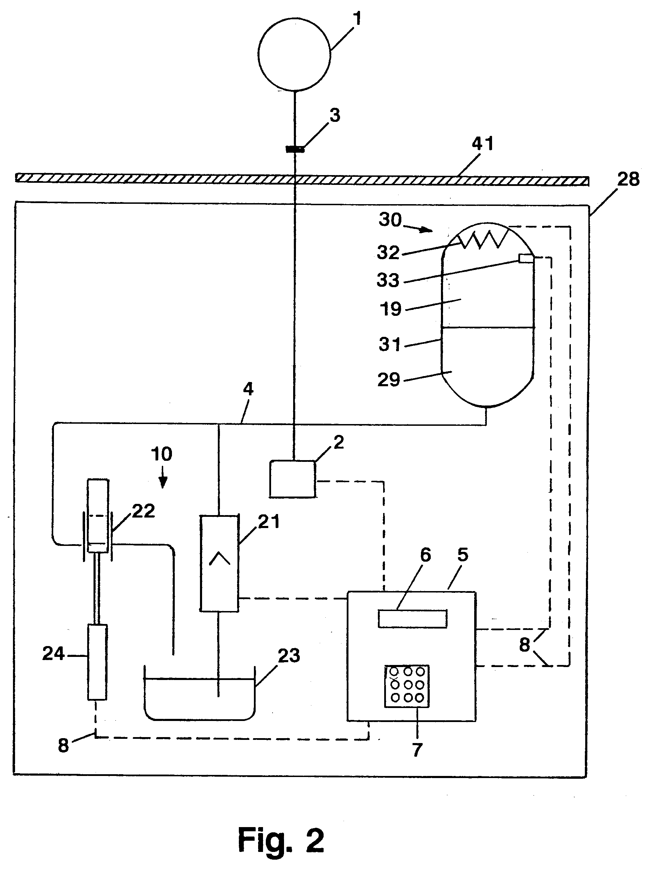

Reference is now made to Fig. 2 showing a second embodiment of the calibration apparatus 28 according to the invention. The Fig. 2 embodiment is based on the same inventive idea but it is adapted for the calibration of the sensors adapted for sensing pressures of liquids.

The Fig. 2 embodiment also comprises a transmission line system 4, a reference pressure sensor 2, a control logic 5 with display 6 and keypad 7, and an interface connector 3 for connection to the device under test 1.

The first pressure setting means in this embodiment comprises essentially a hydraulic pump 21 and a hydraulic valve 22. During operation, the pump 21 sucks hydraulic liquid 29 from sump 23 and drives it into the transmission line system 4. The hydraulic valve 22 is operated by a solenoid 24 whereby the movable element of the valve can be set to any of two positions, an upper position where the transmission line system 4 is drained into the sump 23, i.e. any pressure is relieved, and a lowermost position where the drain is blocked by the valve so that the pump 21 may drive up the pressure in the transmission line system.

The second pressure setting means 30 again comprises thermovessel 31 with temperature setting means 32 and thermosensor 33 similarly to the Fig. 1 embodiment. During operation of the calibration apparatus according to fig. 2, the thermovessel 31 is partially filled with the hydraulic liquid 29 and partially filled with gas 19. The temperature setting means 32 affects the temperature of the gas 19 inside the upper portion of the thermovessel 31 and the thermosensor monitors the temperature within the same region. When the first pressure setting means is operated, the volume of the gas trapped in the upper portion of the thermovessel 31 contracts or expands depending on the hydraulic pressure in the transmission line system.

When the temperature inside the gas-filled portion of the thermovessel 31 is affected by the temperature setting means 32, this brings about expansion or contraction of the volume of gas trapped in the upper portion of the thermovessel 31 above the liquid filling, thereby causing liquid to be driven out from the thermovessel or to be admitted into the thermovessel thus allowing the pressure in the transmission line system 4 to be adjusted in exactly the same way as in the Fig. 1 embodiment. Since in the Fig. 2 embodiment the entire volume of trapped gas is temperature-controlled and at a uniform temperature, the pressure variations are basically calculated from formula (3).

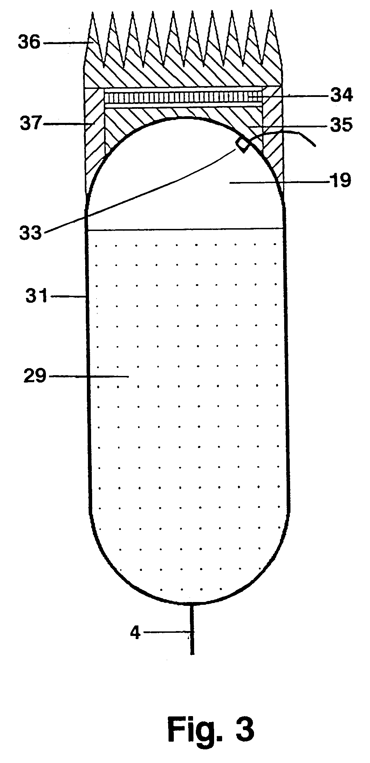

Reference is now made to Fig. 3 showing an enlarged vertical section through an embodiment of the thermovessel 31. Fig. 3 shows the temperature setting means 32 comprising in this embodiment a peltier element 34 arranged adjacent to the top of the thermovessel, the space between the peltier element and the upper wall of the thermovessel being filled with heat conductive material 35. On its upper side, the peltier element 34 is fitted with a heat exchanger 36 with radiator fins so as to provide for an effective exchange of heat with the ambient air. The remaining portion of the wall of the thermovessel i.e. that portion which is not contacted by the temperature setting means, is in a preferred embodiment provided with heat insulation (not shown).

Fig. 3 shows a situation where a greater portion of the thermovessel is filled with liquid 29 whereas a smaller portion is filled with gas 19 such as could be imagined at a stage during calibration of a hydraulic device at a comparatively high pressure. In case the thermovessel is to be used for calibration of gas sensors, the thermovessel 31 will be filled solely with gas.

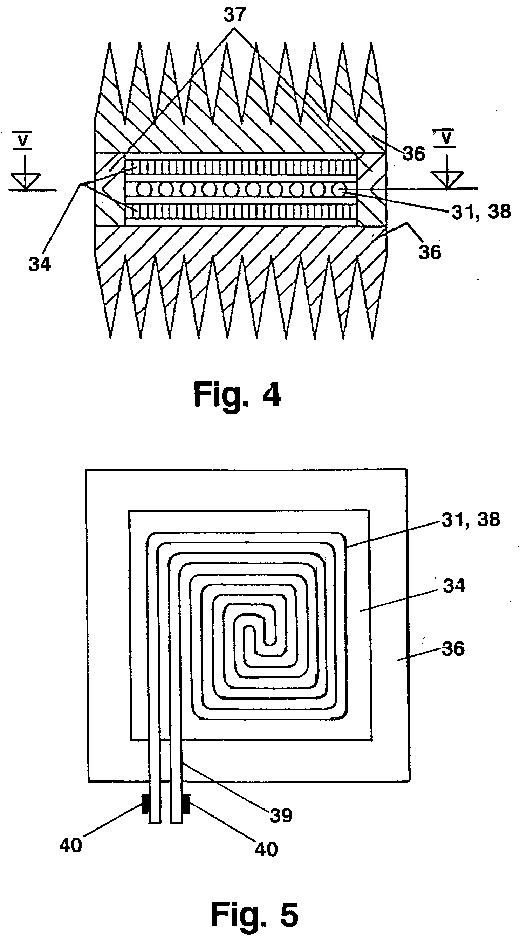

Reference is now made to Figs. 4 and 5 showing a different embodiment of the thermovessel in vertical section (Fig. 4) and in horizontal section (Fig. 5). In this embodiment, the thermovessel comprises a tube 38 coiled in a planar fashion and sandwiched between two peltier elements 34. The tube is connected to the transmission line system in a manner not shown in detail, the volume inside the tube essentially constituting the temperature controlled enclosure. Each of the peltier elements is fitted on the respective side opposite the tube 38 with a respective heat exchanger 36 with radiator fins. The lateral sides of the coiled tube are covered with thermal insulation 37 to prevent heat loss in these directions. By this embodiment the surface area of the thermovessel exposed directly to the peltier elements is large compared to the volume of the thermovessel so that a quick thermal response of the thermovessel can be achieved.

Fig. 5 further shows electric terminals 40 connected to the wall 39 of the coiled tube 38 at mutually spaced positions. These terminals may be used provided the wall of the coiled tube comprises electro-resistive material for heating the coiled tube by driving electric power into the tube walls through the terminals. This may be used with the peltier elements for a faster heating of the thermovessel.

In another embodiment the peltier elements are omitted and the temperature of the thermovessel is set essentially exclusively by controlling the amount of electric energy input into the tube wall.

Although the peltier elements provide the advantage that they can cool or heat the thermovessel, a system relying exclusively on heating relative to the surroundings may yield adequate adjustment capabilities depending on the circumstances.

Although not shown specifically herein, other heating or cooling methods such as could be devised by those skilled in the art are also considered to lie within the scope of the invention. Such systems could comprise radiators, microwave heaters, air blowers, liquid cooling, evaporators, gas expanders, gas compressors, etc.

The calibration apparatus is designed and programmed to operate essentially as follows. A pressure responsive device is connected tightly to the interface connector and a setpoint calibration pressure is selected and entered into the control logic 5 by use of the key pad 7. The control logic measures current pressure by the reference pressure sensor 2 and establishes the difference between desired pressure and actual pressure. The control logic 5 further continually monitors the temperature in the thermovessel by means of the thermosensor 33, and the control logic 5 is preprogrammed with the upper and the lower limit of temperatures that can be selected within the thermovessel.

By comparing actual temperature to the upper and lower temperature limits, the control logic 5 estimates the range of pressure adjustment currently available and establishes whether the second pressure setting means alone will be able to adjust the actual pressure to reach the desired setpoint pressure. If the deviation is considered to lie outside the adjustment range of the second pressure setting means, the control logic 5 operates the valves and the pump to change the pressure setting until the actual pressure lies as close to the desired setpoint pressure as the pump is capable of doing it and the control logic 5 then operates the second pressure setting means to make an exact adjustment of the pressure. When the control logic establishes that the setpoint pressure has been reached, it issues a verification signal on its display thereby alerting the operator to take a reading of the test device response.

For the purpose of deciding exactly when the actual pressure equals the set point pressure, the control logic refers to a preprogrammed margin of tolerance, the verification signal being set whenever the actual pressure value lies within a tolerance band around the set point pressure. The margin of tolerance is selected to be wide enough for the second pressure setting means to be able to keep the actual pressure value inside the tolerance band even under the influence of foreseeable spurious disturbing influences. On the other hand, the tolerance band should not be too wide since it represents a margin of error in the calibration.

It will be understood that while specific embodiments of the invention have been described herein this description is not intended to limit the scope of the invention. Others may practise the invention in any of the numerous ways which are suggested to one skilled in the art by this disclosure, and all such practice of invention are considered to be a part hereof which fall within the scope of the appended claims.

**List of References**

| | |
|---|---|
| 1 | Test device |
| 2 | Reference pressure sensor |
| 3 | Interface connector |
| 4 | Transmission line system |
| 5 | Control logic |
| 6 | Display |
| 7 | Key-pad |
| 8 | Cabling |
| 9 | |
| 10 | First pressure setting means |
| 11 | Pump |
| 12 | Pump inlet valve |
| 13 | Vent line for inlet valve |
| 14 | Solenoid for inlet valve |
| 15 | Pump outlet valve |
| 16 | Vent line for outlet valve |
| 17 | Solenoid for outlet valve |
| 18 | Calibration apparatus for gas |
| 19 | Gas |
| 20 | |
| 21 | Hydraulic pump |
| 22 | Hydraulic valve |
| 23 | Sump |
| 24 | Solenoid for hydraulic valve |
| 25 | |
| 26 | |
| 27 | |
| 28 | Calibration apparatus for liquid |
| 29 | Liquid |
| 30 | Second pressure setting means |
| 31 | Thermovessel |
| 32 | Temperature setting means |
| 33 | Thermosensor |
| 34 | Peltier element |
| 35 | Heat conductive material |
| 36 | Heat exchanger |
| 37 | Thermal insulation |
| 38 | Coiled tube |
| 39 | Tube wall |
| 40 | Electric terminal |
| 41 | Heat insulating shield |

**Claims**

1. An apparatus for the calibration of a pressure responsive device by exposing said device to a predetermined setpoint value of fluid pressure and logging the response of said device, comprising
   a fluid-tight transmission line system,
   interface means for the releasable attachment of said pressure responsive device in fluid-tight connection with said transmission line system,
   a reference pressure sensing means in fluid-tight connection with said transmission line system adapted for providing an output signal indicative of a reference value of the fluid pressure in said pressure line system,
   first pressure setting means in fluid-tight connection with said pressure line system for the controlled introduction of fluid into or the controlled extraction of fluid from said transmission line system in order to provide an approximative setting of the pressure within said system,
   second pressure setting means in fluid-tight connection with said transmission line system for the controlled introduction of fluid into or the controlled extraction of fluid from said transmission line system in order to provide a fine adjustment setting of the pressure in said system,
   control means for storing said set-point pressure value, receiving the signal from said reference pressure sensing means, controlling the operation of said first and said second pressure setting means and indicating whether the pressure sensed by said reference pressure sensing means substantially equates said set-point pressure value.

2. An apparatus according to claim 1, **characterized** by said first pressure setting means comprising a compression pump or a high-pressure pump.

3. An apparatus according to claim 1, **characterized** by said first pressure setting means comprising a vacuum pump.

4. An apparatus according to claim 1, **characterized** by said second pressure setting means comprising a fluid-containing enclosure in fluid-tight connection with said transmission line system, said enclosure being provided with temperature setting means for shifting the temperature of at least a portion of said enclosure whereby the pressure of at least a portion of any fluid present in said enclosure will be affected in such a way that fluid will be forced out from said enclosure and into said transmission line system to effect an increase in the pressure therein or be allowed to flow into said enclosure from said transmission line system to effect a decrease in the pressure therein depending on the setting of the temperature whereby a fine adjustment of the pressure in said transmission line system can be effected by appropriate setting of the temperature.

5. An apparatus according to claim 4, **characterized** by said temperature setting means comprising an electric heating element, preferably an electro-resistive heater or a peltier element.

6. An apparatus according to claims 4 or 5, **characterized** by said temperature setting means comprising an electric cooling element, preferably a peltier element.

7. An apparatus according to claim 4, **characterized** by said enclosure being adapted for holding a volume of a gas to be influenced by said temperature setting means.

8. An apparatus according to claim 7, **characterized** by being adapted for operating with gas as fluid and in said transmission line system and in all parts in fluid connection therewith.

9. An apparatus according to claim 7, **characterized** by being adapted for operating with gas as the temperature affected portion of fluid in said enclosure while said transmission line system is filled with liquid.

10. An apparatus according to claim 7, **characterized** by said enclosure comprising a planar coiled tube placed in contact between faces of a heating or a cooling device.

11. An apparatus according to claim 7, **characterized** by said enclosure comprising a coiled tube made from an electro-resistive material and provided with electric terminals in mutually spaced contact with a wall of said tube so that said tube may be heated by driving electric current through portions of said wall between said terminals.

12. An apparatus according to any one of the preceding claims, **characterized** by comprising a heat insulating shield adapted for preventing thermal coupling between the pressure responsive device to be calibrated and the calibration apparatus.

**13.** An apparatus according to any of the claims 4 through 12, **characterized** by said enclosure being provided with temperature sensing means adapted for providing an output signal indicative of the temperature set by said temperature setting means,

said control means being adapted for receiving the signal from said temperature sensing means,

said control means comprising a control logic adapted for storing an upper and a lower limit for the temperature allowed, for controlling said temperature so as to adjust the pressure as necessary to substantially equate the set point pressure value while constraining the temperature set to stay within the range defined by said upper and lower limits, and for activating said first pressure setting means to change the approximative setting of the pressure in case the deviation between the set-point pressure value and the pressure value sensed by said reference pressure sensing means exceeds the adjustment capability of said second control pressure setting means available within the constraints given by said temperature range.

**14.** An apparatus for the calibration of a pressure responsive device by exposing said device to a predetermined setpoint value of fluid pressure and logging the response of said device, comprising

a fluid-tight transmission line system,

interface means for the releasable attachment of said pressure responsive device in fluid-tight connection with said transmission line system,

a reference pressure sensing means in fluid-tight connection with said transmission line system adapted for providing an output signal indicative of a reference value of the fluid pressure in said pressure line system,

a pressure setting means in fluid-tight connection with said transmission line system for the controlled introduction of fluid into or the controlled extraction of fluid from said transmission line system in order to provide a setting of the pressure in said system, said pressure setting means comprising a fluid-containing enclosure in fluid-tight connection with said transmission line system, said enclosure being provided with temperature setting means for shifting the temperature of at least a portion of said enclosure whereby the pressure of at least a portion of any fluid present in said enclosure will be affected in such a way that fluid will be forced out from said enclosure and into said transmission line system to effect an increase in the pressure therein or be allowed to flow into said enclosure from said transmission line system to effect a decrease in the pressure therein depending on the setting of the temperature whereby a setting of the pressure in said transmission line system can be effected by appropriate setting of the temperature, and

control means for storing said set-point pressure value, receiving the signal from said reference pressure sensing means, controlling the operation of said pressure setting means and indicating whether the pressure sensed by said reference pressure sensing means substantially equates said set-point pressure value.

**15.** A method for the calibration af a pressure responsive device comprising

placing said device in fluid-tight connection with a fluid transmission line system,

providing a reference pressure sensing means in fluid-tight connection with said transmission line system adapted for establishing a reference value of the fluid pressure in said transmission line system,

selecting a set-point value of pressure for the calibration,

providing an approximative setting of the pressure close to the setpoint value in said transmission line system by controlled introduction into or controlled extraction of fluid from said transmission line system through controlled operation of a first pressure setting means,

providing a fine adjustment of the pressure in said transmission line system by the controlled introduction into or the controlled extraction of fluid from said transmission line system through controlled operation of a second pressure setting means,

indicating when the pressure sensed by the reference pressure sensing means substantially equates the setpoint pressure value,

and logging the response of said pressure responsive device while the pressure sensed equates the setpoint pressure.

**16.** A method for the calibration of a pressure responsive device comprising

placing said device in fluid-tight connection with a fluid transmission line system,

providing a reference pressure sensing means in fluid-tight connection with said transmission line system adapted for establishing a reference value of the fluid pressure in said transmission line system,

selecting a set-point value of pressure for the calibration,

providing a setting of the pressure in said transmission line system by the controlled introduction into or the controlled extraction of fluid from said transmission line system through controlled operation of a pressure setting means, said pressure setting means comprising a fluid-containing enclosure in fluid-tight connection with said transmission line system, said enclosure being provided with temperature setting means for shifting the temperature of at least a portion of said enclosure whereby the pressure of at least a portion of any fluid present in said enclosure will be affected in such a way that fluid will be forced out from said enclosure and into said transmission line system to effect an increase in the pressure therein or be allowed to flow into said enclosure from said transmission line system to effect a decrease in the pressure therein depending on the setting of the temperature whereby a setting of the pressure in said transmission line system can be effected by appropriate setting of the temperature,

indicating when the pressure sensed by the reference pressure sensing means substantially equates the setpoint pressure.

# Fig. 1

**Fig. 2**

**Fig. 3**

**Fig. 4**

**Fig. 5**

European Patent
Office

**EUROPEAN SEARCH REPORT**

Application Number

EP 94 20 2194

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-3 782 168 (R.A. WAILES)<br>* column 2 - column 4 *<br>--- | 1,14-16 | G01L27/00 |
| A | WO-A-93 08454 (OTTESTAD BREATHING SYSTEMS AS)<br>* claims 1-4 *<br>--- | 1,14 | |
| A | PATENT ABSTRACTS OF JAPAN<br>vol. 12, no. 298 (P-744) 15 August 1988<br>& JP-A-63 071 627 (TOKYO KEIKI CO. LTD.) 1 April 1988<br>* abstract *<br>--- | 1,14 | |
| A | SOVIET INVENTIONS ILLUSTRATED<br>Section EI, Week 8712, 1 April 1987<br>Derwent Publications Ltd., London, GB;<br>Class S02, AN 87-085381<br>& SU-A-1 247 700 (MOSC AVIATION INST) 30 July 1986<br>* abstract *<br>--- | 1,15 | |
| A | PATENT ABSTRACTS OF JAPAN<br>vol. 15, no. 47 (P-1162) 5 February 1991<br>& JP-A-02 281 120 (CHUBU ELECTRIC POWER CO. INC.) 16 November 1990<br>* abstract *<br>--- | 1 | TECHNICAL FIELDS SEARCHED (Int.Cl.6)<br><br>G01L |
| A | PATENT ABSTRACTS OF JAPAN<br>vol. 12, no. 290 (P-742) (3137) 9 August 1988<br>& JP-A-63 066 432 (SHIMADZU CORP.) 25 March 1988<br>* abstract *<br>---<br>-/-- | 1 | |

The present search report has been drawn up for all claims

| Place of search | Date of completion of the search | Examiner |
|---|---|---|
| BERLIN | 8 December 1994 | DIETRICH, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 94 20 2194

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 3, no. 149 (E-157) 8 December 1979 & JP-A-54 127 376 (TOKYO SHIBAURA DENKI K.K.) 10 March 1979 * abstract * | 14 | |
| | | | TECHNICAL FIELDS SEARCHED (Int.Cl.6) |

The present search report has been drawn up for all claims

| Place of search | Date of completion of the search | Examiner |
|---|---|---|
| BERLIN | 8 December 1994 | DIETRICH, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document